# FASCICULE DE BREVET EUROPEEN

(11) **EP 0 942 674 B1**
(45) Date de publication et mention de la délivrance du brevet: **10.10.2001**
(21) Numéro de dépôt: 97947125.7
(22) Date de dépôt: 24.11.1997
(51) Int. Cl.: A47J 42/56

(54) **APPAREIL MENAGER A COUTEAU ROTATIF POUR LA PREPARATION D'ALIMENTS COMPORTANT UN DISPOSITIF DE SECURITE**
HAUSHALTSGERÄT MIT ROTIERENDEM MESSER ZUR ZUBEREITUNG VON LEBENSMITTELN VERSEHEN MIT SICHERHEITSVORRICHTUNG
HOUSEHOLD APPLIANCE WITH ROTATING KNIFE FOR PREPARING FOOD COMPRISING A SAFETY DEVICE

(30) Priorité: 04.12.1996 FR 9614873
(43) Date de publication de la demande: 22.09.1999
(73) Titulaire: MOULINEX S.A., 14123 Cormelles le Royal (FR); Brisard, Pierre, 50890 Condé sur Vire (FR); Radigue, Jean-Jacques, 53100 Mayenne (FR)
(72) Inventeur: BRISARD, Pierre, F-50890 Condé sur Vire (FR); RADIGUE, Jean-Jacques, F-53100 Mayenne (FR)
(74) Mandataire: Busquets, Jean-Pierre
(86) Numéro de dépôt international: FR9702115
(87) Numéro de publication internationale: WO9824350

(56) Documents cités:
- WO-A-96/22720
- DE-A- 3 904 983
- FR-A- 1 201 685
- FR-A- 2 415 996
- FR-A- 2 442 033
- FR-E- 77 369

## Description

La présente invention concerne un appareil ménager à couteau rotatif pour la préparation d'aliments, tel qu'un hachoir, comportant un bol dans lequel est monté un couteau et sur lequel est verrouillé un couvercle amovible ; un bloc moteur amovible comprenant un boîtier coiffant le couvercle et renfermant un moteur électrique dont l'arbre de sortie fait saillie du boîtier et est destiné à entraîner en rotation le couteau ; un dispositif de commande de l'alimentation électrique du moteur comprenant un interrupteur actionné par un organe de commande manuelle monté élastiquement mobile dans le boîtier ; et un dispositif de sécurité propre à autoriser l'alimentation du moteur par suite de la fermeture de l'interrupteur uniquement lorsque le couvercle est correctement verrouillé sur le bol.

Un tel appareil ménager est notamment décrit dans WO-A-96/22720.

On sait qu'un tel appareil ménager, qualifié de petit préparateur culinaire, est particulièrement efficace notamment pour hacher, mixer et émulsionner les matières alimentaires, et que le dispositif de sécurité qui l'équipe est adapté à empêcher la mise en marche de l'appareil sans la présence du bol de manière à protéger l'utilisateur de tout risque de blessure qui serait dû au couteau en mouvement si l'appareil était mis en marche sans le bol.

Dans un appareil ménager connu de ce genre, le dispositif de sécurité qui interdit la mise en marche de l'appareil tant que le couvercle n'est pas correctement verrouillé sur le bol, comporte un ensemble de pattes élastiques liées au couvercle et qui sont susceptibles soit de s'engager dans des encoches correspondantes ménagées dans le boîtier du bloc moteur lorsque le couvercle est correctement verrouillé sur le bol, pour venir solliciter un organe de transmission permettant l'actionnement de l'interrupteur de mise en marche du moteur, soit de venir en butée contre le bord inférieur du boîtier du bloc moteur lorsque le couvercle n'est pas verrouillé sur le bol, de manière que l'organe de transmission empêche l'actionnement de l'interrupteur. Un tel dispositif de sécurité est cependant relativement complexe à réaliser, et est d'une mise en oeuvre compliquée pour l'utilisateur, notamment pour positionner correctement les pattes du couvercle en vis-à-vis des encoches du boîtier du bloc moteur.

L'invention a notamment pour but de remédier à ces inconvénients et de réaliser un appareil ménager, du type exposé ci-dessus, dans lequel le dispositif de sécurité soit d'une structure simple, économique, parfaitement adaptée à une fabrication en grande série et d'une mise en oeuvre particulièrement aisée.

Selon l'invention, le dispositif de sécurité comprend une première pièce montée mobile solidairement dans le couvercle entre une position inactive dans laquelle elle est effacée pour l'essentiel à l'intérieur du couvercle lorsque ce dernier n'est pas verrouillé sur le bol, et une position active dans laquelle elle fait saillie hors de la partie supérieure du couvercle lors du verrouillage correct du couvercle sur le bol, et une deuxième pièce montée dans le boîtier du bloc moteur, à proximité de l'interrupteur, comprenant une partie active débouchant de la partie inférieure du boîtier et située en regard de la première pièce, et qui est élastiquement mobile entre une position de sécurité pour laquelle sa partie active est rendue inopérante lorsque la première pièce est en position inactive et dans laquelle ladite deuxième pièce bloque l'interrupteur dans son état d'ouverture, et une position escamotée pour laquelle sa partie active est actionnée par la première pièce en position active de manière à libérer l'interrupteur.

Ainsi, grâce à la combinaison des première et deuxième pièces mobiles en engagement interactif uniquement lorsque le couvercle est correctement verrouillé sur le bol, le dispositif de sécurité ainsi réalisé est d'une mise en oeuvre aisée et permet d'une manière simple de garantir une sécurité absolue à l'utilisateur en interdisant, par suite de l'effacement de la première pièce solidaire du couvercle, toute mise en marche de l'appareil lorsque le bol n'est pas présent ou lorsque le couvercle n'est pas correctement verrouillé sur le bol.

Selon une autre caractéristique de l'invention, le boîtier du bloc moteur comporte un dispositif permettant, avant utilisation, de verrouiller le bloc moteur sur l'ensemble formé par le bol et le couvercle correctement verrouillé sur ledit bol, et après utilisation, de déverrouiller ledit bloc moteur.

Ce dispositif de verrouillage-déverrouillage permet ainsi, après verrouillage du bloc moteur sur l'ensemble bol-couvercle, de réaliser avantageusement ce type d'appareil ménager sous la forme d'un appareil monobloc qui présente-donc une grande stabilité lors de son utilisation, ainsi qu'une bonne maniabilité, offrant ainsi à l'utilisateur un grand confort de travail. Par ailleurs, l'opération de déverrouillage du bloc moteur satisfait entre autres les normes de sécurité qui interdisent l'enlèvement du bol avant l'arrêt complet du couteau.

Les caractéristiques et avantages de l'invention ressortiront d'ailleurs de la description qui va suivre, à titre d'exemple non limitatif, en référence aux dessins annexés dans lesquels :
- la figure 1 est une vue éclatée en coupe verticale d'un bol logeant un couteau, d'un couvercle et d'un bloc moteur d'un appareil ménager selon l'invention ;
- la figure 2 est une vue de dessus du couvercle de l'appareil de la figure 1 ;
- la figure 3 est une vue schématique en perspective d'un verrou monté dans le bloc moteur de l'appareil de la figure 1 ;
- la figure 4 est une vue en coupe verticale de l'appareil, en position arrêt, après assemblage des pièces de la figure 1, et montrant le couvercle correctement verrouillé sur le bol ;
- la figure 5 est un schéma en coupe d'un développé partiel de l'ensemble bol-couvercle illustré en une position correspondant au couvercle simplement posé sur le bol ;
- la figure 6 est une représentation analogue à celle de la figure 5, mais pour laquelle le couvercle est correctement verrouillé sur le bol ; et
- la figure 7 est une vue analogue à celle de la figure 4, montrant le bloc moteur en position de déverrouillage.

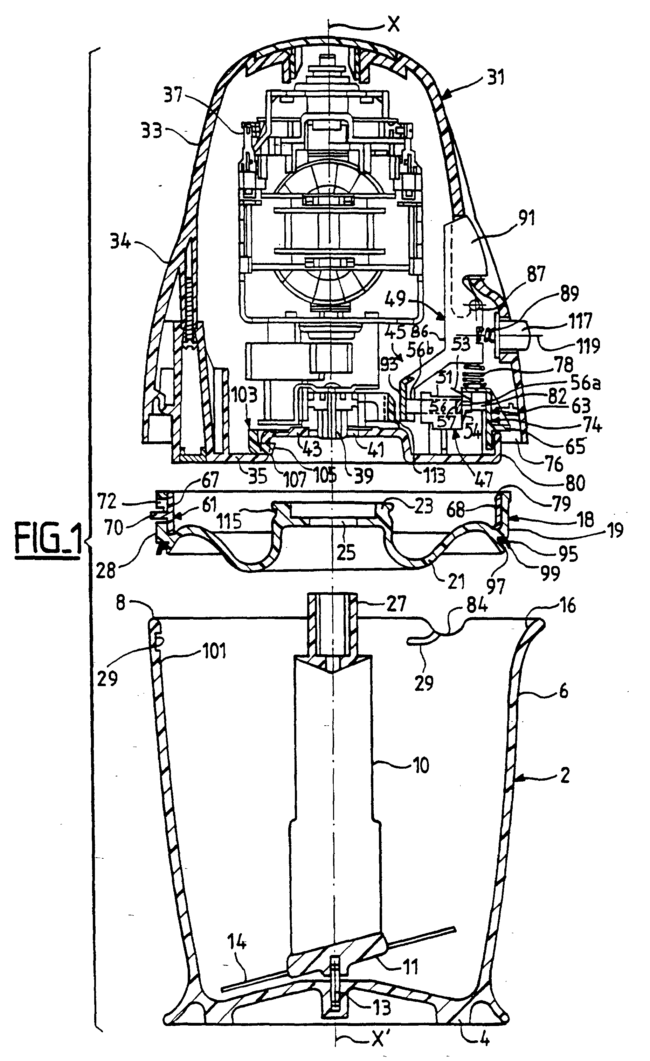

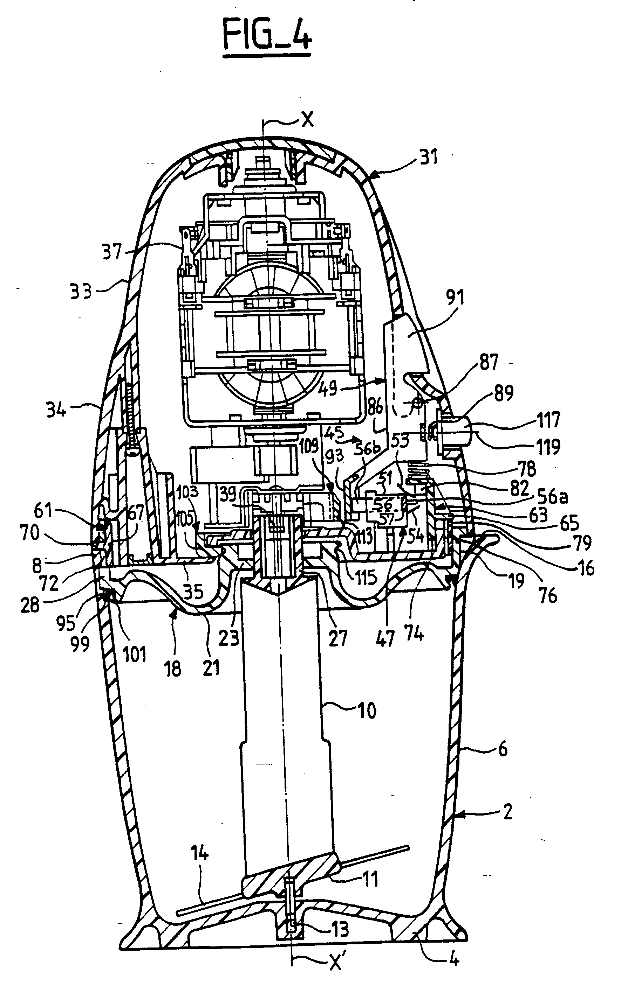

L'appareil ménager illustré à l'état démonté à la figure 1 et à l'état monté à la figure 4, est un petit hachoir de forme générale cylindro-ovale d'axe XX'. Il comporte un bol de travail 2 ayant un fond 4 et une paroi latérale 6 à bord supérieur circulaire 8, et logeant verticalement, selon l'axe XX', un arbre rotatif amovible 10 dont l'extrémité inférieure 11, d'une part, est engagée sur un petit palier cylindrique 13 axé sur l'axe XX' et ancré dans le fond 4 du bol 2, et d'autre part, porte un couteau surmoulé 14, par exemple à deux lames. Sur son bord supérieur 8, le bol 2 est pourvu d'un bec verseur 16.

Le bol est destiné à être fermé par verrouillage par un couvercle 18 qui, présentement, est conformé en une coupelle ayant une paroi latérale cylindrique 19 et un fond 21 présentant une embase annulaire 23 coaxiale à l'arbre 10 et pourvue d'une ouverture 25 à travers laquelle fait librement saillie l'extrémité supérieure 27 de l'arbre 10 une fois le couvercle 18 placé sur le bol 2 (figure 4).

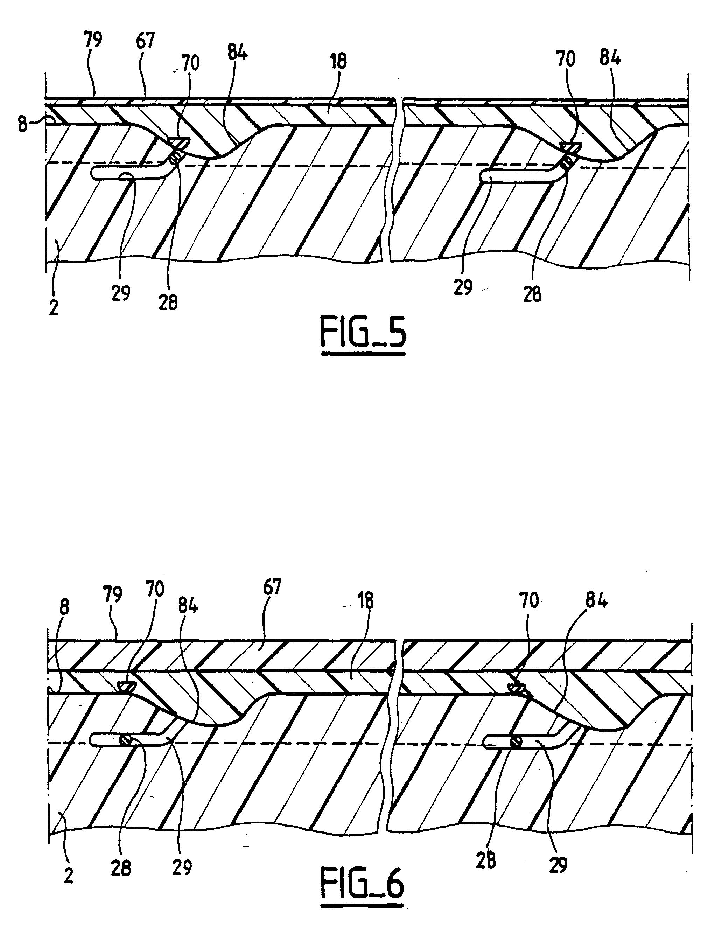

Le couvercle 18 est verrouillé sur le bol 2 au moyen d'un dispositif de fixation du type à baïonnette comprenant une pluralité d'ergots 28, par exemple au nombre de trois, répartis régulièrement à la base de la paroi latérale 19 du couvercle 18, et venant s'encliqueter chacun, par suite d'une rotation du couvercle 18, dans un cran formant rampe 29, mieux visible à la figure 6, pratiqué dans la face interne du bol 2, à proximité du bord supérieur 8 de celui-ci.

Le hachoir, figures 1, 4 et 7, comporte en outre un bloc moteur amovible 31 comprenant un boîtier 33 de forme sensiblement semi-ovale destiné à coiffer le couvercle 18 et présentant une paroi latérale 34 et une paroi de fond circulaire 35, et qui renferme un moteur électrique 37 dont l'arbre de sortie 39 fait saillie à travers une ouverture 41 pratiquée dans un siège annulaire 43 de forme complémentaire à l'embase 23 du couvercle 18 et réalisé dans la paroi de fond 35 du boîtier 33. Après verrouillage correct du couvercle 18 sur le bol 2, l'arbre 39 du moteur 37 vient s'accoupler directement avec l'extrémité supérieure libre 27 de l'arbre porte-couteau 10 lorsque le boîtier 33 coiffe le couvercle 18, de manière à entraîner en rotation ledit arbre porte-couteau 10 sous l'action d'un dispositif de commande manuelle 45, voir figure 4.

En regard des figures 1 et 4, le dispositif de commande manuelle 45 comprend un interrupteur 47 agencé dans le circuit d'alimentation du moteur 37 et dont la fermeture est commandée par un organe de commande manuelle 49 monté élastiquement mobile dans le boîtier 33. Dans cet exemple de réalisation, figures 1 et 4, l'interrupteur 47 comporte un corps 51 portant extérieurement deux contacts fixes 53,54 tournés l'un vers l'autre, et dans lequel est monté coulissant un poussoir horizontal de contact 56 conformé en une tige cylindrique dont les deux extrémités libres 56a,56b font saillie du corps 51, et qui porte, à proximité de son extrémité libre 56a, une bague métallique 57 faisant office de contact. Comme illustré à la figure 4, le poussoir 56 est déplaçable dans le sens de la fermeture, uniquement lorsque le couvercle 18 est correctement verrouillé sur le bol 2, par pression exercée par l'organe de commande manuelle 49 sur l'extrémité libre 56b du poussoir 56, la bague métallique 57 venant alors coopérer avec les deux contacts fixes 53,54.

Le hachoir, figures 1 et 4, comporte de plus un dispositif de sécurité propre à autoriser l'alimentation du moteur 37 par suite de la fermeture de l'interrupteur 47 uniquement lorsque le couvercle 18 est correctement verrouillé sur le bol 2 (figure 4), et qui, selon l'invention, comprend deux pièces, à savoir :
- une première pièce 61 montée mobile solidairement dans le couvercle 18 entre une position inactive dans laquelle elle est effacée pour l'essentiel à l'intérieur du couvercle 18 lorsque ce dernier n'est pas verrouillé sur le bol 2, comme montré à la figure 1, et une position active (figure 4) dans laquelle elle fait saillie hors de la partie supérieure du couvercle 18 lors du verrouillage correct du couvercle 18 sur le bol 2 ;
- et une deuxième pièce 63 montée dans le boîtier 33 du bloc moteur 31, à proximité de l'interrupteur 47, comprenant une partie active 65 débouchant de la partie inférieure du boîtier 33 et située en regard de la première pièce 61, et qui est élastiquement mobile entre une position de sécurité pour laquelle sa partie active 65 est rendue inopérante lorsque la première pièce 61 est en position inactive et dans laquelle la deuxième pièce 63 bloque l'interrupteur 47 dans son état d'ouverture, comme montré à la figure 1, et une position escamotée (figure 4) pour laquelle sa partie active 65 est actionnée par la première pièce 61 en position active de manière à libérer l'interrupteur 47.

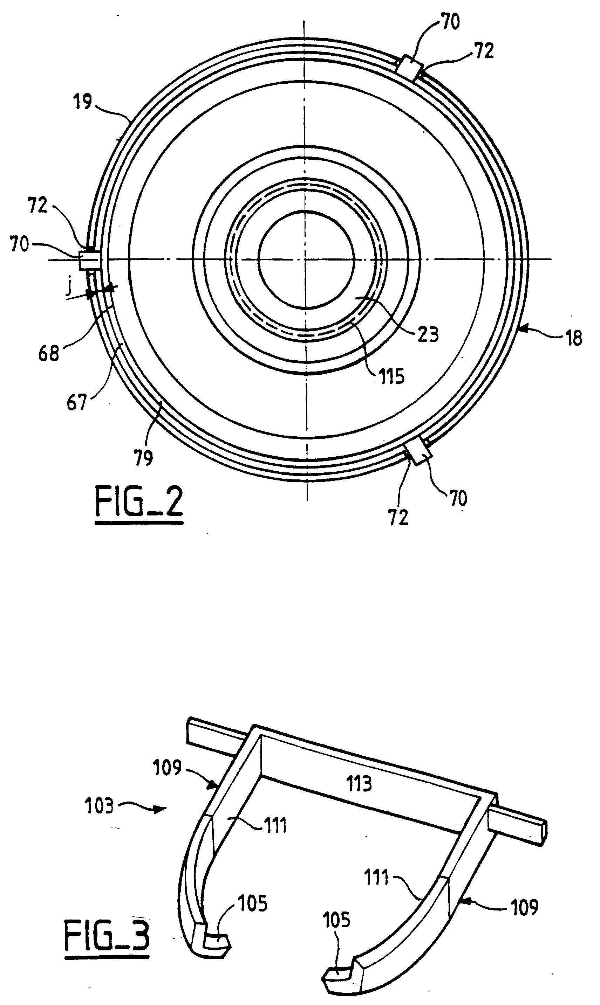

Dans un mode d'exécution préféré illustré aux figures 1 et 4, la première pièce mobile 61 est constituée par un anneau interne 67 présentant une face latérale 68 qui est concentrique à la paroi latérale 19 du couvercle 18 en ménageant avec celle-ci un léger jeu périphérique, noté j à la figure 2, et qui porte radialement au moins un doigt 70, en l'occurrence au nombre de trois régulièrement répartis (voir figure 2) et distribués angulairement d'une manière identique aux trois ergots 28 de verrouillage à baïonnette du couvercle 18 sur le bol 22, chacun de ces doigts 70 faisant librement saillie à travers une lumière de débattement 72 ménagée dans la paroi latérale 19 du couvercle 18. L'anneau 67 est déplacé en translation verticale depuis sa position inactive (effacement à l'intérieur du couvercle 18) montrée à la figure 1 jusqu'à sa position active (saillie hors du couvercle 18) illustrée à la figure 4, par appui de chacun de ses doigts 70 sur le bord supérieur 8 du bol 2 lors du verrouillage correct du couvercle 18 sur le bol 2.

Dans cet exemple, la deuxième pièce mobile 63 comprend, quant à elle, un coulisseau vertical 74 ayant une patte transversale 65 qui constitue la partie active et qui débouche dans une ouverture ou espace interne 76 ménagé en bordure périphérique de la paroi de fond 35 du boîtier 33 du bloc moteur 31. Le coulisseau 74 est déplacé verticalement, à l'encontre d'un ressort de rappel 78 interposé entre l'organe de commande manuelle 49 et le coulisseau 74, depuis sa position de sécurité (blocage de l'interrupteur 47 dans son état d'ouverture) montrée à la figure 1 jusqu'à sa position escamotée (libération de l'interrupteur 47) illustrée à la figure 4, sous une poussée ou pression suffisante exercée sur la patte 65 par le bord supérieur 79 de l'anneau 67 en position active (figure 4).

Comme le montre la figure 1, la patte 65 du coulisseau 74 en position de sécurité repose, sous l'action du ressort de rappel 78, sur une petite aile verticale 80 formée dans la paroi de fond 35 du boîtier 33 et bordant l'espace interne 76.

Dans cet exemple de réalisation, figures 1 et 4, le coulisseau 74 comprend une butée 82 destinée, d'une part, à venir en appui contre l'extrémité libre 56a du poussoir 56 de l'interrupteur 47 lorsque le coulisseau 74 est en position de sécurité (figure 1), de manière à bloquer l'interrupteur 47 dans son état d'ouverture, et d'autre part, à venir en dégagement de cette extrémité libre 56a du poussoir 56 lorsque le coulisseau 74 est en position escamotée (figure 4), de manière à permettre la fermeture de l'interrupteur 47 sous l'action de l'organe de commande manuelle 49.

En regard des figures 5 et 6, le bord supérieur 8 du bol 2 comprend une pluralité d'encoches 84, par exemple en forme de V, qui sont en nombre égal à celui des crans de verrouillage 29, en l'occurrence au nombre de trois, et qui sont réalisées chacune au niveau de l'un des crans 29. Lorsque le couvercle 18 est simplement posé sur le bol 2, c'est-à-dire non correctement verrouillé sur le bol, comme illustré à la figure 5, chaque doigt 70 de l'anneau 67 repose sensiblement dans le fond de l'encoche correspondante 84 du bol 2, et l'anneau 67 reste dans sa position inactive pour laquelle son bord supérieur 79 fait très légèrement saillie du couvercle 18, comme visible à la figure 5, sur une hauteur telle qu'il ne puisse pas actionner la patte 65 du coulisseau 74 lorsque le bloc moteur 31 est mis en place. Par contre, lorsque le couvercle 18 est correctement verrouillé sur le bol 2, comme illustré à la figure 6, l'anneau 67 passe alors de sa position inactive à sa position active par suite d'un déplacement de chacun de ses doigts 70 le long de la bordure de l'encoche correspondante 84 du bol 2, depuis le fond de l'encoche jusqu'au bord supérieur 8 du bol, voir figure 6.

Dans l'exemple de réalisation illustré aux figures 1, 4 et 7, l'organe de commande manuelle 45 est constitué par un levier basculant 86 qui est monté verticalement dans le boîtier 33 en étant articulé autour d'un axe horizontal 87, qui est associé à un ressort de rappel 89, dont l'extrémité supérieure 91 fait saillie de la paroi latérale 34 du boîtier 33 et est conformée en une touche de manoeuvre manuelle, et dont l'extrémité inférieure 93 coopère avec l'extrémité libre 56b du poussoir 56 de l'interrupteur 47 (figures 1 et 4).

Sur les figures 1, 4-et 7, on a désigné en 95 un joint d'étanchéité annulaire qui est monté dans une gorge annulaire 97 ménagée en bordure périphérique externe du fond 21 du couvercle 18, et qui est pourvu d'une lèvre périphérique 99 venant se plaquer, lors du verrouillage correct du couvercle 18 sur le bol 2 (figure 4), contre un épaulement annulaire 101 formé sur la face interne du bol 2.

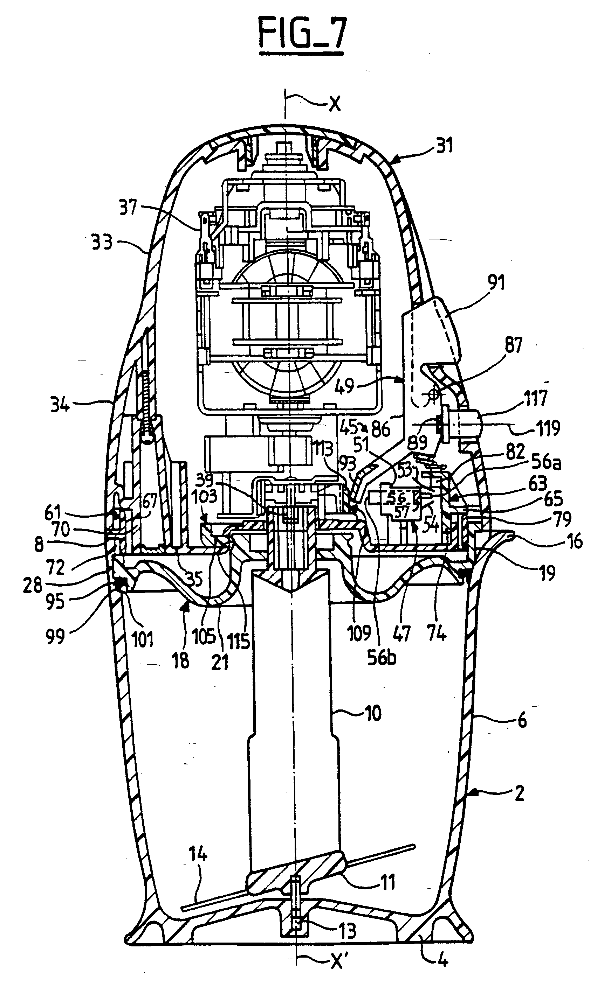

Selon une autre caractéristique de l'invention, le boîtier 33 du bloc moteur 31 comporte de plus un dispositif permettant, avant utilisation du hachoir, de verrouiller le bloc moteur 31 sur l'ensemble formé par le bol 2 et le couvercle 18 correctement verrouillé sur le bol (figure 4), et après utilisation, de déverrouiller le bloc moteur 31 (figure 7).

En regard des figures 1, 4 et 7, ce dispositif de verrouillage-déverrouillage comporte un verrou 103, mieux visible à la figure 3, comprenant au moins un doigt d'accrochage 105 représenté, dans un souci de compréhension, dans un plan décalé sur les figures 1, 4 et 7, en l'occurrence au nombre de deux comme illustré à la figure 3, faisant chacun radialement saillie dans une ouverture 107 pratiquée dans le siège 43 de la paroi de fond 35 du boîtier 33, ainsi que deux pièces de transmission 109 dont chacune est déformable élastiquement et comprend, en regard de la figure 3, un bras 111 incliné vers le bas et portant en extrémité le doigt d'accrochage 105 ; les deux pièces de transmission 109, figure 3, sont reliées entre elles par une barrette transversale 113 également déformable élastiquement, qui est montée en appui dans le boîtier 33 et qui s'étend à faible distance de l'extrémité inférieure 93 du levier 86 (figures 1 et 4).

De préférence, le verrou 103 est moulé d'une seule pièce en une matière thermoplastique à propriété élastique, telle que par exemple un polyacétal.

Chaque doigt d'accrochage 105 du verrou est mobile entre une position de verrouillage (figure 4) dans laquelle il s'engage par encliquetage automatique, lors du montage du bloc moteur 31 sur l'ensemble bol 2 - couvercle 18, dans une gorge annulaire 115 pratiquée dans l'embase 23 du couvercle 18, et une position de déverrouillage (figure 7) dans laquelle il est dégagé de la gorge 115 et en laquelle il est amené par déformation élastique de la barrette 113 et de la pièce de transmission correspondante 109 sous l'action du levier 86 commandé par un organe de manoeuvre manuelle 117.

Dans l'exemple de réalisation illustré aux figures 1, 4 et 7, l'organe de manoeuvre manuelle 117 est un bouton-poussoir qui est monté du même côté que la touche 91 en ayant un axe de déplacement 119 situé en dessous de l'axe d'articulation 87 du levier 86 et s'étendant dans un plan transversal au plan passant par l'axe d'articulation 87. Ce bouton-poussoir 117 est associé au même ressort de rappel 89 que celui du levier 86, lequel ressort de rappel 89 est interposé sur l'axe de déplacement 119 du bouton-poussoir, entre le levier 86 et le bouton-poussoir 117. De plus, le bouton-poussoir 117 est adapté, lors du déverrouillage du bloc moteur 31 (figure 7), à venir exercer une pression suffisante sur le levier 86, à l'encontre du ressort de rappel 89, pour faire basculer le levier 86 de manière que l'extrémité inférieure 93 de ce dernier vienne actionner la barrette 113 de liaison des deux pièces de transmission 109.

Grâce à ce dispositif de verrouillage-déverouillage, on comprend qu'après verrouillage automatique du bloc moteur 31 sur l'ensemble formé par le bol 2 et le couvercle 18 correctement verrouillé sur le bol (figure 4), on obtient un hachoir monobloc offrant notamment une grande stabilité lors de son utilisation. Par ailleurs, le déverrouillage du bloc moteur 31 à l'aide du bouton-poussoir 117 sollicitant le levier 86 dans le sens d'ouverture de l'interrupteur 47, permet de ne pas retirer le bloc moteur 31 lorsque le moteur est en marche, garantissant ainsi une sécurité électrique. De plus, dans le cas où la touche 91 se trouve coincée, une sollicitation du levier 86 par actionnement du bouton-poussoir 117 permettra de débloquer la touche 91.

Le fonctionnement du hachoir équipé du dispositif de sécurité conforme à l'invention est le suivant.

Dans le cas où le couvercle 18 n'est pas correctement verrouillé sur le bol 2 ou si le bol 2 n'est pas présent, chacun des doigts 70 de l'anneau 67 n'est pas ou très peu sollicité, de sorte que l'anneau 67 n'est quasiment pas soulevé et ne vient donc pas actionner la patte 65 du coulisseau 74 lorsque l'utilisateur désire verrouiller le bloc moteur 31. Le coulisseau 74 n'étant pas sollicité, comme montré à la figure 1, sa butée 82 est maintenue en appui contre l'extrémité libre 56a du poussoir 56 de l'interrupteur 47, empêchant donc tout actionnement de l'interrupteur 47 par le levier 86, de sorte que l'appareil ne peut être mis en marche, garantissant ainsi une sécurité absolue.

Pour utiliser l'appareil, il convient donc de verrouiller correctement le couvercle 18 sur le bol 2 ; ce verrouillage est réalisé par une rotation du couvercle 18 au cours de laquelle les ergots 28 du couvercle 18 viennent s'encliqueter dans les crans 29 du bol 2, et simultanément, l'anneau 67 du couvercle 18 est soulevé par suite du déplacement de chacun de ses doigts 70 dans l'encoche correspondante 84 du bol 2, voir figures 4 et 6. Lors du verrouillage automatique du bloc moteur 31 sur l'ensemble bol 2 - couvercle 18, l'anneau en saillie 67 actionne la patte 65 du coulisseau 74, lequel coulisseau est donc également soulevé et sa butée 82 est dégagée de l'extrémité libre 56a du poussoir 56 de l'interrupteur 47, voir figure 4. En appuyant alors sur la touche 91, le levier 86 bascule en sens antihoraire et vient actionner l'interrupteur 47 qui se ferme, ce qui provoque la mise en marche du moteur.

Dès que l'utilisateur relâche la touche 91, le levier 86 reprend sa position initiale de la figure 4 ; l'interrupteur 47 s'ouvre alors et coupe l'alimentation du moteur 37 qui s'arrête.

En fin de préparation, l'utilisateur appuie sur le bouton-poussoir 117 qui fait basculer en sens horaire le levier 86 dont l'extrémité inférieure 93 vient appuyer sur la barrette 113 des deux pièces de transmission 109 qui se déforment élastiquement à la manière d'une pince qui s'ouvre, provoquant alors le dégagement des doigts d'accrochage 105 hors de la gorge 115 du couvercle 18, et donc le déverrouillage du bloc moteur 31, comme illustré à la figure 7. Après retrait du bloc moteur 31, dès que l'utilisateur relâche le bouton-poussoir 117, le verrou 103 et le levier 86 reprennent chacun leur position initiale de la figure 1, tandis que le coulisseau 74 redescend et reprend sa position de sécurité montrée à la figure 1. Le couvercle 18 est ensuite déverrouillé du bol 2 par une rotation en sens inverse, au cours de laquelle l'anneau 67 du couvercle 18 redescend et reprend sa position inactive telle que montrée à la figure 1.

## Revendications

1. Appareil ménager à couteau rotatif pour la préparation d'aliments, comportant un bol (2) dans lequel est monté un couteau (10) et sur lequel est verrouillé un couvercle amovible (18) ; un bloc moteur amovible (31) comprenant un boîtier (33) coiffant le couvercle et renfermant un moteur électrique (37) dont l'arbre de sortie (39) fait saillie du boîtier et est destiné à entraîner en rotation le couteau (10) ; un dispositif (45) de commande de l'alimentation électrique du moteur comprenant un interrupteur (47) actionné par un organe de commande manuelle (49) monté élastiquement mobile dans le boîtier ; et un dispositif de sécurité propre à autoriser l'alimentation du moteur par suite de la fermeture de l'interrupteur uniquement lorsque le couvercle (18) est correctement verrouillé sur le bol (2),
**caractérisé en ce que** le dispositif de sécurité comprend une première pièce (61) montée mobile solidairement dans le couvercle (18) entre une position inactive dans laquelle elle est effacée pour l'essentiel à l'intérieur du couvercle (18) lorsque ce dernier n'est pas verrouillé sur le bol, et une position active dans laquelle elle fait saillie hors de la partie supérieure du couvercle (18) lors du verrouillage correct du couvercle sur le bol, et une deuxième pièce (63) montée dans le boîtier (33) du bloc moteur, à proximité de l'interrupteur (47), comprenant une partie active (65) débouchant de la partie inférieure du boîtier (33) et située en regard de la première pièce (61), et qui est élastiquement mobile entre une position de sécurité pour laquelle sa partie active (65) est rendue inopérante lorsque la première pièce (61) est en position inactive et dans laquelle ladite deuxième pièce (63) bloque l'interrupteur (47) dans son état d'ouverture, et une position escamotée pour laquelle sa partie active (65) est actionnée par la première pièce (61) en position active de manière à libérer l'interrupteur (47).

2. Appareil ménager selon la revendication 1,
**caractérisé en ce que** le couvercle (18) étant conformé en une coupelle ayant un fond (21) et une paroi latérale cylindrique (19), la première pièce (61) est constituée par un anneau (67) présentant une face latérale (68) qui est concentrique à la paroi latérale (19) du couvercle en ménageant avec celle-ci un léger jeu périphérique, et qui porte radialement au moins un doigt (70) faisant saillie à travers une lumière de débattement (72) ménagée dans ladite paroi latérale (19) du couvercle, cet anneau (67) étant déplacé en translation verticale depuis sa position inactive jusqu'à sa position active par appui de son doigt (70) sur le bord supérieur (8) du bol (2) lors du verrouillage correct du couvercle sur le bol, tandis que la deuxième pièce (63) comprend un coulisseau vertical (74) ayant une patte transversale (65) qui constitue la partie active et qui débouche dans un espace (76) situé en bordure périphérique de la partie inférieure du boîtier (33), ce coulisseau (74) étant déplacé verticalement à l'encontre d'un moyen élastique de rappel (78) depuis sa position de sécurité jusqu'à sa position escamotée sous une poussée exercée sur ladite patte (65) par le bord supérieur (79) de l'anneau (67) en position active.

3. Appareil ménager selon la revendication 2,
**caractérisé en ce que** le couvercle (18) étant verrouillé sur le bol (2) au moyen d'un dispositif de verrouillage à baïonnette comprenant une pluralité d'ergots (28) formés à la base de la paroi latérale (19) du couvercle (18) et venant s'encliqueter respectivement dans des crans formant rampes (29)-pratiqués dans la face interne du bol (2), à proximité du bord supérieur (8) du bol, ledit bord supérieur (8) du bol comprend une pluralité d'encoches (84), en nombre égal à celui des crans (29), réalisées respectivement au niveau desdits crans (29), le doigt (70) de l'anneau (67) venant reposer sensiblement dans le fond de l'une des encoches (84) lorsque le couvercle (18) est simplement posé sur le bol (2), et l'anneau (67) passant de sa position inactive à sa position active par suite d'un déplacement du doigt (70) depuis le fond de l'encoche (84) jusqu'au bord supérieur (8) du bol.

4. Appareil ménager selon l'une des revendications 1 à 3,
**caractérisé en ce que** l'interrupteur (47) comprenant un poussoir de contact (56) qui s'étend horizontalement dans le boîtier (33) du bloc moteur et qui est déplaçable dans le sens de la fermeture, uniquement lorsque le couvercle est correctement verrouillé sur le bol, par pression exercée par l'organe de commande manuelle (49) sur l'une (56b) des extrémités libres du poussoir (56), la deuxième pièce (63) comprend une butée (82) destinée, d'une part, à venir en appui contre l'autre extrémité libre (56a) du poussoir (56) lorsque ladite deuxième pièce (63) est en position de sécurité, de manière à bloquer l'interrupteur (47) dans son état d'ouverture, et d'autre part, à venir en dégagement de cette extrémité libre (56a) du poussoir (56) lorsque ladite deuxième pièce (63) est en position escamotée, de manière à permettre la fermeture de l'interrupteur (47) sous l'action dudit organe de commande manuelle (49).

5. Appareil ménager selon la revendication 4,
**caractérisé en ce que** l'organe de commande manuelle (49) est constitué par un levier basculant (86) qui est monté verticalement dans le boîtier (33) en étant articulé autour d'un axe horizontal (87), qui est associé à un ressort de rappel (89), dont l'extrémité supérieure (91) fait saillie de la paroi latérale du boîtier et est conformée en une touche de manoeuvre manuelle, et dont l'extrémité inférieure (93) coopère avec le poussoir (56) de l'interrupteur (47).

6. Appareil ménager selon l'une quelconque des revendications précédentes,
**caractérisé en ce que** le boîtier (33) du bloc moteur comporte un dispositif permettant, avant utilisation, de verrouiller le bloc moteur (31) sur l'ensemble formé par le bol (2) et le couvercle (18) correctement verrouillé sur ledit bol, et après utilisation, de déverrouiller ledit bloc moteur (31).

7. Appareil ménager selon les revendications 5 et 6,
**caractérisé en ce que** le dispositif de verrouillage-déverrouillage comporte au moins un verrou (103) comprenant au moins un doigt d'accrochage (105) faisant radialement saillie dans une ouverture (107) pratiquée dans un siège annulaire (43) formé dans la paroi de fond (35) du boîtier (33) et coaxial à l'arbre (39) du moteur, et au moins une pièce de transmission (109) déformable élastiquement, portant ledit doigt d'accrochage (105), et s'étendant à faible distance de l'extrémité inférieure (93) du levier (86), ledit doigt d'accrochage (105) étant mobile entre une position de verrouillage dans laquelle il s'engage par encliquetage automatique, lors de la mise en place du bloc moteur sur l'ensemble bol-couvercle, dans une gorge annulaire (115) pratiquée dans une embase (23) de forme complémentaire audit siège (43) et ménagée dans le fond (21) du couvercle (18), et une position de déverrouillage dans laquelle il est dégagé de ladite gorge (115) et en laquelle il est amené par déformation élastique de la pièce de transmission (109) sous l'action du levier (86) commandé par un organe de manoeuvre manuelle (117).

8. Appareil ménager selon la revendication 7,
**caractérisé en ce que** le verrou (103) est réalisé d'une seule pièce en une matière thermosplastique à propriété élastique, telle qu'un polyacétal.

9. Appareil ménager selon la revendication 7 ou 8,
**caractérisé en ce que** l'organe de manoeuvre manuelle (117) est un bouton-poussoir qui est monté du même côté que la touche de manoeuvre manuelle (91) en ayant un axe de déplacement (119) situé en dessous de l'axe d'articulation (87) du levier (86) et s'étendant dans un plan transversal au plan passant par ledit axe d'articulation (87), et qui est associé à un ressort de rappel (89) interposé sur l'axe de déplacement (119) entre le levier (86) et le bouton-poussoir (117) et constituant également le ressort de rappel du levier, ledit bouton-poussoir (117) étant adapté à solliciter le levier (86), à l'encontre de la force de rappel du ressort, pour le faire basculer de manière que l'extrémité inférieure (93) dudit levier (86) vienne actionner la pièce de transmission (109).

10. Appareil ménager selon l'une quelconque des revendications précédentes,
**caractérisé en ce que** le couvercle (18) porte dans sa partie inférieure un joint d'étanchéité annulaire (95) qui est pourvu d'une lèvre périphérique (99) venant se plaquer, lors du verrouillage correct du couvercle sur le bol, contre un épaulement annulaire (101) formé sur la face interne du bol (2).

## Patentansprüche

1. Haushaltsgerät mit rotierenden Messern zur Zubereitung von Lebensmitteln mit einem Becher (2), in dem ein Messer (10) montiert ist und auf dem ein abnehmbarer Deckel (18) verriegelt ist, einem abnehmbaren Motorblock (31) mit einem den Deckel übergreifenden Gehäuse (33), das einen elektrischen Motor (37) umschließt, dessen Abtriebswelle (39) aus dem Gehäuse vorsteht und zum rotierenden Antreiben des Messers (10) dient, einer Steuervorrichtung (45) für die Stromversorgung des Motors mit einem Schalter (47), der durch ein handbetätigtes Steuerelement (49) betätigt ist, das im Gehäuse elastisch beweglich montiert ist, und mit einer Sicherheitsvorrichtung, welche die Stromversorgung des Motors nach Schließen des Schalters nur dann zuläßt, wenn der Deckel (18) auf dem Becher (2) richtig verriegelt ist, **dadurch gekennzeichnet, daß** die Sicherheitsvorrichtung ein erstes Teil (61) aufweist, das im Deckel (18) untrennbar mit diesem verbunden und zwischen einer inaktiven Stellung, in welcher es im wesentlichen im Inneren des Deckels (18) zurückgezogen ist, wenn letzterer nicht auf dem Becher verriegelt ist, und einer aktiven Stellung, in welcher es aus dem oberen Teil des Deckels (18) vorsteht, wenn der Deckel auf dem Becher richtig verriegelt ist, beweglich montiert ist, und ein zweites Teil (63) aufweist, das im Gehäuse (33) des Motorblocks in der Nähe des Schalters (47) montiert ist und einen aktiven Teil (65) aufweist, der im unteren Bereich des Gehäuses (33) mündet, und gegenüber dem ersten Teil (61) angeordnet und elastisch beweglich ist zwischen einer Sicherheitsstellung, in welcher sein aktiver Teil (65) unwirksam ist, wenn das erste Teil (61) in der inaktiven Stellung ist und in der das zweite Teil (63) den Schalter (47) in seiner Öffnungsstellung blockiert, und einer zurückgeschobenen Stellung, in welcher sein aktiver Teil (65) durch das erste Teil (61) in aktiver Stellung so betätigt wird, daß der Schalter (47) freigegeben wird.

2. Haushaltsgerät nach Anspruch 1, **dadurch gekennzeichnet, daß** der Deckel (18) schalenförmig mit einem Boden (21) und einer zylindrischen Seitenwand (19) gebildet ist, das erste Teil (61) aus einem Ring (67) mit einer Seitenfläche (68), die zur Seitenwand (19) des Deckels konzentrisch ist und dabei zu dieser ein geringes Umfangsspiel hat, besteht und radial mindestens einen Finger (70) trägt, der durch eine in der Seitenwand (19) des Deckels ausgebildete Ausnehmung (72) vorsteht, wobei dieser Ring (67) durch Andruck seines Fingers (70) auf den oberen Rand (8) des Bechers (2) vertikal aus seiner inaktiven Stellung in seine aktive Stellung verschoben wird, wenn der Deckel auf dem Becher richtig verriegelt ist, während das zweite Teil (63) einen vertikalen Schieber (74) mit einem Querfinger (65) aufweist, der den aktiven Teil bildet und sich in einen im Umfangsrand des unteren Teils des Gehäuses (33) ausgebildeten Raum (76) erstreckt, wobei dieser Schieber (74) gegen die Wirkung einer elastischen Rückstellvorrichtung (78) unter einem Druck, der vom oberen Rand (79) des Ringes (67) in der aktiven Stellung auf den Finger (63) ausgeübt wird, von seiner Sicherheitsstellung bis in seine weggeschobene Stellung vertikal verschoben wird.

3. Haushaltsgerät nach Anspruch 2, **dadurch gekennzeichnet, daß**, wenn der Deckel (18) auf dem Becher (2) mittels einer Bajonettverriegelungsvorrichtung mit einer Mehrzahl von an der Basis der Seitenwand (19) des Deckels (18) ausgebildeten Zapfen (28) verriegelt ist, die jeweils in Rasten einrasten, welche in der Innenfläche des Bechers (2) in der Nähe der oberen Kante (8) des Bechers Rampen (29) bilden, wobei der obere Rand (8) des Bechers eine Mehrzahl von Kerben (84) aufweist, deren Zahl gleich der Zahl der Rasten (29) ist und die jeweils auf der Höhe der Rasten (29) ausgebildet sind, wobei der Finger (70) des Ringes (67) im wesentlichen am Boden einer dieser Kerben (84) ruht, wenn der Deckel (18) einfach auf den Becher (2) gesetzt ist, und der Ring (67) durch eine Verschiebung des Fingers (70) vom Boden der Kerbe (84) bis zum oberen Rand (8) des Bechers aus seiner inaktiven Stellung in seine aktive Stellung gelangt.

4. Haushaltsgerät nach einem der Ansprüche 1 bis 3, **dadurch gekennzeichnet, daß** der Schalter (47) einen Kontaktschieber (56) aufweist, der sich horizontal im Gehäuse (33) des Motorblocks erstreckt und in Richtung des Schließens des Kontakts nur dann verschiebbar ist, wenn der Deckel auf dem Becher richtig verriegelt ist, indem durch das Handbetätigungselement (49) auf eines (56b) der freien Enden des Schiebers (56) ein Druck ausgeübt wird, wobei das zweite Teil (63) einen Anschlag (82) aufweist, der einerseits gegen das andere freie Ende (56a) des Schiebers (56) drückt, wenn das zweite Teil (63) in der Sicherheitsstellung ist, um so den Schalter (47) in seiner Öffnungsstellung zu blockieren, und andererseits dieses freie Ende (56a) des Schiebers (56) freigibt, wenn das zweite Teil (63) in weggeschobener Stellung ist, so daß das Schließen des Schalters (47) unter der Wirkung des Handbetätigungselements (49) möglich ist.

5. Haushaltsgerät nach Anspruch 4, **dadurch gekennzeichnet, daß** das Handsteuerelement (49) aus einem Schwenkhebel (86) besteht, der im Gehäuse (33) vertikal montiert und dabei um eine horizontale Achse (87) schwenkbar angelenkt ist und mit einer Rückstellfeder (89) zusammenwirkt, deren oberes Ende (91) von der Seitenwand des Gehäuses vorsteht und als eine Handbetätigungstaste ausgebildet ist, deren unteres Ende (93) mit dem Schieber (56) des Schalters (47) zusammenwirkt.

6. Haushaltsgerät nach einem der vorangehenden Ansprüche, **dadurch gekennzeichnet, daß** das Gehäuse (33) des Motorblocks eine Vorrichtung aufweist, die es ermöglicht, vor dem Gebrauch den Motorblock (31) an der von dem Becher (2) und dem richtig auf ihm verriegelten Deckel (18) gebildeten Anordnung zu verriegeln und nach dem Gebrauch den Motorblock (31) zu entriegeln.

7. Haushaltsgerät nach einem der Ansprüche 5 und 6, **dadurch gekennzeichnet, daß** die Verriegelungs-Entriegelungsvorrichtung mindestens einen Riegel (103) mit mindestens einem Haltefinger (105) aufweist, der radial in eine Öffnung (107) vorsteht, die in einem Ringsitz (43) ausgebildet ist, der in der Bodenwand (35) des Gehäuses (33) und koaxial zur Welle (39) des Motors ausgebildet ist, und mindestens ein elastisch verformbares Verbindungsstück (109) aufweist, das den Haltefinger (105) trägt und sich in geringem Abstand vom unteren Ende (93) des Hebels (86) erstreckt, wobei der Haltefinger (105) beweglich ist zwischen einer Verriegelungsstellung, in welcher er automatisch in eine Ringnut (115) einrastet, die in einem Vorsprung (23) von zum Sitz (43) komplementärer Form im Boden (120) des Deckels (18) ausgebildet ist, wenn der Motorblock auf die Anordnung Becher-Deckel aufgesetzt wird, und einer Entriegelungsstellung, in der er von der Nut (115) frei ist und in welche er durch elastische Verformung des Verbindungsteils (109) unter der Wirkung des von einem Handbetätigungselement (117) betätigten Hebels (86) gelangt.

8. Haushaltsgerät nach Anspruch 7, **dadurch gekennzeichnet, daß** der Riegel (103) einstückig aus einem thermoplastischen Material mit elastischer Eigenschaft, wie ein Polyacetal hergestellt ist.

9. Haushaltsgerät nach Anspruch 7 oder 8, **dadurch gekennzeichnet, daß** das Handbetätigungselement (117) ein Druckknopf ist, der auf der gleichen Seite wie die Handbetätigungstaste (91) montiert ist und dabei eine unterhalb der Schwenkachse (87) des Hebels (86) angeordnete Verschiebungsachse (119) hat, die sich in einer Ebene quer zu der durch die Schwenkachse (87) gehenden Ebene erstreckt, wobei der Druckknopf mit einer Rückstellfeder (89) zusammenwirkt, die auf der Verschiebungsachse (119) zwischen dem Hebel (86) und dem Druckknopf (117) angeordnet ist und auch die Rückstellfeder des Hebels bildet, wobei der Druckknopf (117) so eingerichtet ist, daß er den Hebel (86) gegen die Rückstellkraft der Feder beaufschlagt, um ihn so schwenken zu lassen, daß das untere Ende (93) des Hebels (86) das Verbindungsstück (109) betätigt.

10. Haushaltsgerät nach einem der vorangehenden Ansprüche, **dadurch gekennzeichnet, daß** der Deckel (18) in seinem unteren Teil eine Ringdichtung (95) trägt, die mit einer Umfangslippe (99) versehen ist, die sich bei der richtigen Verriegelung des Deckels auf dem Becher gegen eine an der Innenseite des Bechers (2) gebildete Ringschulter (101) anlegt.

## Claims

1. Domestic appliance with a rotary knife for preparing food, having a bowl (2) in which a knife (10) is mounted and on which a removable cover (18) is locked; a removable motor unit (31) comprising a casing (33) fitting on top of the cover and enclosing an electric motor (37) whose output shaft (39) projects from the casing and is intended to drive the knife (10) in rotation; a device (45) for controlling the electrical supply to the motor comprising a switch (47) actuated by a manual control member (49) mounted so as to be elastically movable in the casing; and a safety device suitable for allowing the power supply to the motor following the closure of the switch only when the cover (18) is correctly locked on the bowl (2),
**characterised in that** the safety device comprises a first piece (61) mounted so as to be able to move, whilst fixed in the cover (18), between an inactive position in which it is essentially retracted within the cover (18) when the latter is not locked on the bowl, and an active position in which it projects out of the top part of the cover (18) when the cover is correctly locked on the bowl, and a second piece (63) mounted in the casing (33) of the motor unit, close to the switch (47), comprising an active part (65) emerging from the bottom part of the casing (33) and situated opposite the first piece (61), and which is elastically movable between a safety position in which its active part (65) is made inoperative when the first piece (61) is in the inactive position and in which said second piece (63) locks the switch (47) in its open state, and a retracted position in which its active part (65) is actuated by the first piece (61) in the active position so as to release the switch (47).

2. Domestic appliance according to claim 1,
**characterised in that**, the cover (18) being shaped like a dish having a bottom (21) and a cylindrical side wall (19), the first piece (61) consists of a ring (67) having a side face (68) which is concentric with the side wall (19) of the cover whilst forming with the latter a slight peripheral clearance, and which radially carries at least one finger (70) projecting through a clearance aperture (72) provided in said side wall (19) of the cover, this ring (67) being moved in vertical translation from its inactive position to its active position by abutment of its finger (70) on the top rim (8) of the bowl (2) when the cover is correctly locked on the bowl, whilst the second piece (63) comprises a vertical slide (74) having a transverse lug (65) which constitutes the active part and which emerges in a space (76) situated at the peripheral edge of the bottom part of the casing (33), this slide (74) being moved vertically counter to an elastic return means (78) from its safety position to its retracted position under a thrust exerted on said lug (65) by the top edge (79) of the ring (67) in its active position.

3. Domestic appliance according to claim 2,
**characterised in that**, the cover (18) being locked on the bowl (2)by means of a bayonet locking device comprising a plurality of spurs (28) formed at the base of the side wall (19) of the cover (18) and coming to snap respectively into notches forming ramps (29) formed in the internal face of the bowl (2), close to the top rim (8) of the bowl, said top rim (8) comprises a plurality of recesses (84), equal in number to the notches (29), produced respectively level with said notches (29), the finger (70)of the ring (67) coming to rest substantially in the bottom of one of the notches (84) when the cover (18) is simply placed on the bowl (2), and the ring (67) passing from its inactive position to its active position following a movement of the finger (70) from the bottom of the recess (84) to the top rim (8) of the bowl.

4. Domestic appliance according to one of claims 1 to 3,
**characterised in that**, the switch (47) comprising a contact pusher (56) which extends horizontally in the casing (33) of the motor unit and which is movable in the direction of closure only when the cover is correctly locked on the bowl, by pressure exerted by the manual control member (49) on one (56b) of the free ends of the pusher (56), the second piece (63) comprises a stop (82) intended on the one hand to come into abutment against the other free end (56a) of the pusher (56) when the second piece (63) is in the safety position, so as to lock the switch (47) in its open state, and on the other hand to come to be released from this free end (56a) of the pusher (56) when the second piece (63) is in the retracted position, so as to allow the closure of the switch (47) under the action of said manual control member (49).

5. Domestic appliance according to claim 4,
**characterised in that** manual control member (49) consists of a tilting lever (86) which is mounted vertically in the casing (33) whilst being articulated around a horizontal shaft (87), which is associated with a return spring (89), the top end (91) of which projects from the side wall of the casing and is shaped like a manual manoeuvring button, and whose bottom end (93) cooperates with the pusher (56) of the switch (47).

6. Domestic appliance according to any one of the preceding claims,
**characterised in that** the casing (33) of the motor unit has a device for allowing, before use, to lock the motor unit (31) on the assembly formed by the bowl (2) and the cover (18) correctly locked on said bowl, and, after use, to unlock said motor unit (31).

7. Domestic appliance according to claims 5 and 6,
**characterised in that** the locking/unlocking device includes at least one lock (103) comprising at least one hooking finger (105) projecting radially in an opening (107) formed in an annular seat (43) formed in the bottom wall (35) of the casing (33) and coaxial with the shaft (39) of the motor, and at least one elastically deformable transmission piece (109), carrying said hooking finger (105), and extending at a short distance from the bottom end (93) of the lever (86), said hooking finger (105) being movable between a locking position in which it engages by automatic snapping, when the motor unit is fitted on the bowl/cover assembly, in an annular groove (115) formed in a base (23) with a shape complementary to the seat (43) and provided in the bottom (21) of the cover (18), and an unlocking position in which it is released from the groove (115) and into which it is brought by elastic deformation of the transmission piece (109) under the action of the lever (86) controlled by a manual manoeuvring member (117).

8. Domestic appliance according to claim 7,
**characterised in that** the lock (103) is produced in a single piece from a thermoplastic material with elastic properties, such as a polyacetal.

9. Domestic appliance according to claim 7 or 8,
**characterised in that** the manual manoeuvring member (117) is a push button which is mounted on the same side as the manual manoeuvring button (91) whilst having an axis of movement (119) situated below the articulation axis (87) of the lever (86) and lying in a plane transverse to the plane passing through the articulation axis (87), and which is associated with a return spring (89) interposed on the axis of movement (119) between the lever (86) and the push bottom (117) and also constituting the return spring for the lever, said push button (117) being adapted to act on the lever (86), counter to the return force of the spring, in order to cause it to tilt so that the bottom end (93) of the lever (86) comes to actuate the transmission piece (109).

10. Domestic appliance according to any one of the preceding claims,
**characterised in that** the cover (18) carries in its bottom part an annular sealing joint (95) which is provided with a peripheral lip (99) coming to be pressed, when the cover is correctly locked on the bowl, against an annular shoulder (101) formed on the internal face of the bowl (2).
